# EUROPEAN PATENT APPLICATION

(11) **EP 4 631 864 A1**
(43) Date of publication of application: **15.10.2025**
(21) Application number: 25163303.8
(22) Date of filing: 12.03.2025
(51) Int. Cl.: B64F 5/10

(54) **AIRCRAFT STRUCTURAL ELEMENT**

(30) Priority: 12.04.2024 GB 202405251
(71) Applicant: Airbus Operations Limited, Bristol BS34 7PA (GB)
(72) Inventor: CHACIN, Marco, Bristol, BS34 7PA (GB); RIVERA, Luis, Bristol, BS34 7PA (GB); AHMED, Mahmoud, Bristol, BS34 7PA (GB)
(74) Representative: Lerwill-Williams, Jonathan Ashley Ronald

(57) **Abstract**

Disclosed is an aircraft structural element configured to be assemblable into an aircraft structure. The aircraft structural element comprises a sensor disposed on or within the aircraft structural element. The sensor is configured to sense a parameter during assembly of the aircraft structural element into the aircraft structure, and to output a signal indicative of the parameter during assembly of the aircraft structural element into the aircraft structure. An aircraft assembly system, and method of assembly based on the same are also disclosed.

## Description

### TECHNICAL FIELD

The present invention relates to the assembly of aircraft structures, and more specifically to use of sensors in assembling aircraft.

### BACKGROUND

Aircraft assembly is typically an intensive, time-consuming, and expensive process. It is desirable to improve aircraft assembly.

### SUMMARY

A first aspect of the present invention provides an aircraft structural element configured to be assemblable into an aircraft structure, the aircraft structural element comprising a sensor disposed on or within the aircraft structural element, the sensor configured to sense a parameter during assembly of the aircraft structural element into the aircraft structure; and output a signal indicative of the parameter during assembly of the aircraft structural element into the aircraft structure.

In comprising a sensor disposed or within the aircraft structural element, the aircraft structural element is able to be monitored more closely and more accurately during assembly. Measurements of parameters related to the aircraft structural element such as force, torque, position, temperature, stress, or vibration, may be monitored in real-time. Such measurements can be made at positions of the aircraft structural element which are closer to or at specific points of interest, for example areas which are particularly prone to or vulnerable to stress or strain, or areas for which it is particularly important to prevent damage from occurring, or areas which require particularly accurate alignment. This can be contrasted with existing methods which can typically only infer said parameters from sensors located separately from the aircraft structural element, such as on robotic arms or jigs, or existing methods which employ no such sensors and require human monitoring to oversee the assembly process.

In addition, the collection of data in this manner can be used to monitor performance of an assembly system overall; accumulated sets of measurements from structural elements used in the assemblies of aircraft structures can establish whether the assembly system used to assemble the aircraft structure is achieving a requisite performance standard, for example, or requires maintenance or recalibration, for example.

The aircraft structural element being "configured to be assemblable into an aircraft structure", as described herein, refers to a structural element of the aircraft prior to an assembly process. For instance, the aircraft structural element may be separate from other structural elements to which the aircraft structural element will be attached during assembly. Optionally, the aircraft structural element may lack fasteners which will later be provided during assembly, and for instance require holes to be drilled prior to such fasteners being provided. The structural element of the present invention can be contrasted with aircraft structural elements in their assembled form, which may receive sensors after assembly for a variety of reasons.

"Further" aircraft structural elements, as referred to herein in the context of assembly of an aircraft structure, need not refer to a same type of aircraft structural element as the structural element comprising the sensor, and may instead refer to different types of aircraft structural elements. For instance, the aircraft structure element comprising a sensor may be a rib, and the "further structural element" to which the aircraft structural element is being attached may be a wing skin. The aircraft structural element comprising a sensor may alternatively be referred to as a first aircraft structural element, and the at least one other aircraft structural element be referred to as a second (and so on) aircraft structural element.

Optionally, the parameter is indicative of a force experienced by the aircraft structural element during assembly of the aircraft structural element into the aircraft structure. The force may be any of, or the combination of, a tensile, compressive, or shear force, for example. The sensor may be configured to make a direct measurement of the force, or may be configured to calculate the force by a proxy measurement, for example.

Optionally, the parameter is indicative of a stress experienced within the aircraft structural element during assembly of the aircraft structural element into the aircraft structure. Monitoring stress experienced within the aircraft structural element during assembly can prevent inducing too much stress during assembly, which may otherwise damage the aircraft structural element, for example.

Optionally, the parameter is indicative of a degree of deformation of the aircraft structural element experienced by the aircraft structural element during assembly of the aircraft structure element into the aircraft structure. This can be used to prevent deformation of the aircraft structural element which may otherwise damage the aircraft structural element, for example, or prevent or otherwise produce a poor fit with other aircraft structural components due to a change in shape of the aircraft structural component. In some examples, the parameter is indicative of a strain experienced by the aircraft structural element during assembly of the aircraft structural element into the aircraft structure. Such a measurement can indicate a degree of deformation of the aircraft structural element.

Optionally, the sensor measures the force electronically. Optionally, the sensor is one of a piezoelectric sensor, a capacitive force sensor, or a force-sensing resistor.

Optionally, the parameter is indicative of physical contact between the aircraft structural element and a further aircraft structural element during assembly of the aircraft structural element and the further aircraft structural element into the aircraft structure. Detecting physical contact can indicate a correct positioning of the aircraft structural element without requiring line of sight of contacting surfaces, for example. Additionally or alternatively, the parameter may indicate incorrect contact; for example wherein a portion of the aircraft structural element is in contact with a further aircraft structural element and a neighbouring portion is not in contact with the further aircraft structural element; or wherein the degree of contact, for example as indicated by the size of a force experienced by the aircraft structural element, indicates that the aircraft structural is not properly load bearing, or similar.

Optionally, the sensor is operable as a proximity sensor such that the parameter is indicative of a distance between the aircraft structural element and at least one other aircraft structural element during assembly of the aircraft structural element into the aircraft structure. This can indicate how close the structural element is to the other aircraft structural element, which can be used to inform positioning decisions during assembly.

Optionally, the sensor is located on an external surface of the aircraft structural element. This can allow direct contact of the sensor with other aircraft structural elements which can improve accuracy of the parameter sensed by the sensor. Optionally, the sensor on the external surface of the aircraft structural element is configured to indicate direct contact of the aircraft structural element with another aircraft structural element during assembly of the aircraft structure.

Optionally, the aircraft structural element comprises a recessed portion on the external surface, the recessed portion dimensioned to receive and retain the sensor in a position. The recessed portion can house the sensor to prevent movement of the sensor during assembly, thereby ensuring the sensor is in a fixed position relative the aircraft structural element. This can improve accuracy of assembly. The recessed portion can reduce a prominence of the sensor from surrounding external surface which can allow the structural element to be positioned sufficiently closely to another structural element, sufficiently being within required assembly tolerances, for example. In this way, an impact of introducing the sensor to the aircraft structural element is reduced by provision of the recess, compared with aircraft structural elements which are not provided with sensors on the external surface.

Optionally, the sensor is located within the aircraft structural element. In this way, the sensor can be positioned closely to a point of interest within the structural element, which can allow for accurate monitoring of parameters at that point, for example. Optionally, the sensor is embedded within a body of the aircraft structural element, such that the sensor is substantially surrounded and in contact with material of the aircraft structural element. In other examples, the sensor may be housed by an internal cavity of the aircraft structural element. The sensor may be attached to an internal surface of the cavity within the aircraft structural element, for example, but also have some surfaces not in contact with the aircraft structural element, for example. Optionally, a portion of the sensor is located within the aircraft structural element and a portion of the sensor is located on an external surface of the aircraft structural element, such that the sensor can be considered to be partially embedded in the aircraft structural element, for example.

Optionally, the sensor is an optical fibre Bragg grating. Such a sensor can measure strain or temperature changes by variation in the optical properties of the Bragg grating, such as the refractive index or the periodicity of the grating. Such sensors can be more appropriate for measuring aircraft structures for which electrically active methods of measurement present an unacceptable spark risk, for example in the vicinity of fuel storage or fuel lines.

Optionally, the sensor is a shape memory alloy fibre. Such a sensor generally has electronic properties exhibiting hysteresis, which can be used to determine mechanical properties of the aircraft structural element. Such sensors can have high strength and corrosion resistance which can make them suitable for use in an assembly process whilst remaining flight worthy after assembly, for example.

Optionally, the aircraft structural element is formed of a composite material and the sensor is embedded between layers of the composite material. The sensor may be provided to the composite material during a layup process, and hence be embedded within the composite material.

Optionally, the sensor is configured to output the signal indicative of the parameter upon a measured value of the parameter passing a predetermined threshold value of the parameter during assembly of the aircraft structural element into the aircraft structure. The sensor may not output signals unless the threshold value is passed. Passing the threshold value may mean the measured parameter value is greater than, or less than, the threshold value, for example. Thus, the sensor is configured to output the signal upon comparison of a measured value of the parameter with a predetermined threshold value, the output of the signal being conditional upon the comparison.

Optionally, the sensor is configured to continuously output the signal indicative of the parameter during assembly of the aircraft structural element into the aircraft structure. This can be used to continuously monitor forces experienced by the aircraft structural element during assembly, for example, which could, in turn, inform positioning and orientation decisions regarding the aircraft structural elements, for example. Optionally, continuously outputting the signal can mean repeatedly outputting at a rate at which the sensor makes measurements, or a rate at which a time averaged measurement from the sensor is available, for example. In other examples, continuously outputting the signal can mean repeatedly outputting over a period of time, wherein the output signals can be regularly or irregularly spaced in time. More generally, continuously outputting the signal can mean outputting the signal irrespective of what the measured parameter value is, such as without the output being conditional upon a comparison with a threshold parameter value.

Optionally, the sensor is housed in a sealed enclosure. Such a sealed enclosure may be hermetically sealed, for example. The sealed enclosure may be considered weather sealed. The sensor may be flight-worthy due to the sealed enclosure, for example. The sealed enclosure can be formed by provision of sealant between aircraft structural elements, such as interfay sealant.

Optionally, the aircraft structural element comprises a transmitter configured to transmit the signal indicative of the parameter from the sensor, the transmitter comprising at least one of a wired and/or wireless connection. Optionally, the transmitter is a wireless communications module configured to communicate over a wireless network. Optionally, the transmitter is a wire facilitating a wired connection. Optionally, the transmitter permits both wired and wireless connectivity of the sensor, for example for redundancy purposes.

Optionally, the sensor is a first sensor, the parameter is a first parameter, and the signal is a first signal; and the aircraft structural element comprises a second sensor configured to sense a second parameter during assembly of the aircraft structural element into the aircraft structure and output a second signal indicative of the second parameter during assembly of the aircraft structural element into the aircraft structure. Optionally, the first parameter corresponds with the second parameter, such that the first sensor measures a same quantity as the second sensor, for example.

Optionally, the first sensor is located on an external surface of the aircraft structural element, and the second sensor is located within the aircraft structural element.

Optionally, the aircraft structural element comprises a plurality of sensors in accordance with the first aspect. Optionally the sensors are operated independently from one another. Optionally, the sensors are managed as a sensor assembly, such that the plurality of sensors collectively measure parameters corresponding to a common quantity, for example. Such sensors may produce individual measurements which may be combined to measure a parameter, for example by averaging respective measurements, or measurement of a parameter may be distributed across the sensors, for example by measuring a difference between outputs of the sensors to establish a parameter.

Optionally, the aircraft structural element comprises an external surface having an integrally formed photogrammetry target.

Optionally, the photogrammetry target comprises a protruding portion, the protruding portion protruding relative to adjacent portions of the external surface. The protruding portion can improve visibility of the integrally formed photogrammetry target to a photogrammetry imaging device. This can allow provision of an integrally formed photogrammetry target whilst the structural element can have requisite dimensions, such as a requisite minimum thickness, for example.

Optionally, the photogrammetry target comprises a recessed portion, the recessed portion being recessed relative to adjacent portions of the external surface. The recessed portion can improve visibility of the integrally formed photogrammetry target to a photogrammetry imaging device. This can allow provision of an integrally formed photogrammetry target whilst the structural element can have requisite dimensions, such as a requisite maximum thickness, for example.

Optionally, the photogrammetry target comprises a recessed portion and a protruding portion. This can improve visibility of the integrally formed photogrammetry target to a photogrammetry imaging device, because, for example, the integrally formed photogrammetry target can have a height from the protruding portion to the recessing portion, perpendicular to surrounding external surfaces of the aircraft structural element, the height rendering the photogrammetry target more visible. Additionally, in having recessed and protruding portions, a given height of the photogrammetry profile can be achieved whilst limiting the degree to which the protruding portion protrudes relative to surrounding external surfaces of the aircraft structural element and/or limiting the degree to which the recessed portion is recessed relative to surrounding external surfaces of the aircraft structural element.

Optionally, the photogrammetry target comprises a recessed portion and a protruding portion, wherein the recessed portion abuts the protruding portion. Thus, the recessed portion is directly adjacent to the protruding portion. This can further enhance visibility of the integrally formed photogrammetry target to a photogrammetry imaging device.

Optionally, the aircraft structural element is formed substantially of one material. Optionally, the one material is a metal, or a metal alloy.

Optionally, the aircraft structural element is formed of a composite material. The aircraft structural element may be formed of layers of the composite material, or of composite materials, and formed in a lay-up process, for example. The photogrammetry target may be formed in a layer of the composite material, for example.

Optionally, the integrally formed photogrammetry target comprises a textured portion having a textured surface. This can improve visibility of the integrally formed photogrammetry target to a photogrammetry imaging device. A textured surface, as referred to herein, refers to small-scale surface details compared with larger scale surface features of the integrally formed photogrammetry target. For instance, a brushed or patterned surface which can improve contrast of the integrally formed photogrammetry target to thereby improve visibility. Optionally, the integrally formed photogrammetry target is substantially planar with surrounding surfaces of the external surface, and the target comprises textured portions. In this way, planarity of the aircraft structural element can be maintained whilst the photogrammetry target is visible to a photogrammetry imaging device. Maintaining planarity of the aircraft structural element may be useful in assembling the aircraft structure, for example.

Optionally, the external surface comprises a plurality of integrally formed photogrammetry targets. A plurality of integrally formed photogrammetry targets can improve accuracy of a photogrammetry system.

Optionally, the plurality of integrally formed photogrammetry targets comprises at least three integrally formed photogrammetry targets. Three integrally formed photogrammetry targets can allow a photogrammetry system to identify a geometric plane. This can further enhance reliability and/or accuracy of the photogrammetry system.

Optionally, the plurality of integrally formed photogrammetry targets are distributed across the external surface such that at least three integrally formed photogrammetry targets are visible from any rotational orientation of the aircraft structural element. This can allow a photogrammetry system to determine a position and orientation of the aircraft structural element from any orientation of the aircraft structural element.

Optionally, each integrally formed photogrammetry target of the plurality of integrally formed photogrammetry targets has a different respective design. This can allow each integrally formed photogrammetry target to be uniquely identified by its respective design, which can aid in establishing position and orientation by a photogrammetry system. In other examples, some or all of the integrally formed photogrammetry targets may have substantially identical designs.

Optionally, the aircraft structural element is an aircraft rib.

A second aspect of the present invention provides an aircraft assembly system comprising an aircraft structural element configured to be assemblable into an aircraft structure, the aircraft structural element comprising a sensor disposed on or within the aircraft structural element, the sensor configured to sense a parameter during assembly of the aircraft structural element into the aircraft structure; and output a signal indicative of the parameter during assembly of the aircraft structural element into the aircraft structure; and an assembly coordinator configured to receive the signal indicative of the parameter from the sensor of the aircraft structural element. The second aspect of the present invention therefore provides an aircraft assembly system usable with the aircraft structural element of the first aspect.

Optionally, the assembly coordinator comprises at least one processing device for monitoring assembly of the aircraft structure using the aircraft structural element equipped with a photogrammetry target and/or a sensor. The assembly coordinator may output information which can be used to inform future assembly steps, or provide analysis of a current or previous assembly step, for example. The at least one processing device may be a localised device such as a desktop computer, an FPGA, or an ASIC, for example or a distributed computing system such as a cloud computing system, for example. The assembly coordinator may be realised by a plurality of processing devices which may cooperate with one another.

"A step of assembly", as referred to herein, refers to steps typically performed in order to assemble an aircraft structure. For instance, in some examples the step of assembly is a translation or reorientation of the aircraft structural element. In some examples, the step of assembly is to affix, or attach, the aircraft structural element to another structural element. The skilled person will appreciate assembly can comprise a variety of types of steps, not limited to those described as examples here.

Optionally, the aircraft assembly system comprises a display, and the assembly coordinator and the display are configured to output information indicative of the parameter to a user. This can allow a user to receive live feedback regarding the assembly process. Optionally, information indicative of the parameter is a value of the parameter. Optionally, the information indicative of the parameter represents information about the parameter, such as a warning indicating the parameter is exceeding a threshold value, for example. Optionally, alternatively or additionally to outputting information indicative of the parameter, the assembly coordinator may output instructions to a user based on the parameter. For example, the assembly coordinator may output directional commands instructing a user to translate or reorient the aircraft structural element, based on the parameter sensed by the sensor.

Optionally, the aircraft assembly system comprises a manufacturing tool, and the assembly coordinator and the manufacturing tool are configured to perform a step of assembly of the aircraft structure based on the received signal indicative of the parameter from the sensor. Optionally, the manufacturing tool is operable to perform steps of the assembly automatically, such as a robotic arm or an automated jig. Optionally, more than one steps of assembly are performed based at least in part on the received signal.

Optionally, the step of assembly is moving the aircraft structural element by reorientation or translation. In other examples, the step of assembly is fastening, or affixing, the aircraft structural element to another aircraft structural element to assemble the aircraft structure. Optionally, the measured parameter can prompt multiple steps of assembly, for example a reorientation or translation followed by fastening the aircraft structural element to another aircraft structural element, for example.

Optionally, a continuous feedback loop can be generated using the signals produced by the sensor, enabling assembly to be automated by the assembly coordinator based on relevant information derived from the sensor's output signals.

Optionally, the aircraft assembly system comprises a photogrammetry system comprising a photogrammetry imaging device and a photogrammetry processor, the photogrammetry imaging device and photogrammetry processor configured to determine a position or orientation of an integrally formed photogrammetry target of an aircraft structural element.

In determining a position or orientation of the integrally formed photogrammetry target, a position or orientation of the aircraft structural element can thereby be determined.

Optionally, the photogrammetry system comprising a plurality of photogrammetry imaging devices.

A third aspect of the present invention provides a method of assembling an aircraft structure. The method comprises receiving a signal from a sensor located on or within an aircraft structural element of the aircraft structure during assembly of the aircraft structural element into the aircraft structure, the sensor configured to sense a parameter during assembly of the aircraft structure using the aircraft structural element, and the signal indicative of the parameter during assembly of the aircraft structure; and performing a step of assembly of the aircraft structural element into the aircraft structure based at least in part on the received signal.

Optionally, the sensed parameter is indicative of contact with a further aircraft structural element for attaching to the aircraft structural element during assembly, and wherein the step of assembly comprises reorienting or translating the further aircraft structural element until the signal received from the sensor indicates contact between the aircraft structural element and the further aircraft structural element.

Optionally, the sensed parameter is indicative of a strain experienced by the aircraft structural element during assembly of the aircraft structural element into the aircraft structure, and wherein performing a step of assembly comprises reorienting or translating the aircraft structural element to keep the strain indicated by the sensed parameter below a threshold value.

Optionally, multiple sensors according to the first aspect may be present, and so the method may comprise receiving multiple signals, each signal being from a respective sensor on or within the aircraft structural element and each signal being indicative of a respective parameter, and the step of assembly based on the multiple received signals.

Optionally, the aircraft structural element further comprises a photogrammetry target integrally formed on an external surface, and the method further comprises determining a position or orientation of the integrally formed photogrammetry target using a photogrammetry system during assembly of the aircraft structure; determining a position or orientation of the aircraft structural element based on the position or orientation of the photogrammetry target; and performing a step of assembly of the aircraft structure based on the measured position or orientation of the integrally formed photogrammetry target.

A fourth aspect provides an aircraft comprising the aircraft structure assembled in the first aspect. Such an aircraft can be more efficiently or accurately assembled. Optionally, in such an aircraft and when the aircraft structure comprises sensors, the sensors are disabled after assembly. In other examples, the sensors may be designed in such a way that they are flightworthy, such as by providing a weatherproof housing, and/or by ensuring that the sensors do not provide an ignition risk, for example, and are left in or on the aircraft structure after assembly. In this way, the sensors may remain in or on the aircraft structure through the lifespan of the aircraft.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft assembly system and an aircraft structural element according to the present disclosure;
Figures 2a-c show schematic cross-sectional views of aircraft structural elements according to the present disclosure;
Figures 3a-3f show schematic cross-sectional views of aircraft structural elements according to the present disclosure;
Figure 4 shows a flowchart of a method of assembling an aircraft structure according to the present disclosure;
Figure 5 shows a flowchart of a further method of assembling an aircraft structure according to the present disclosure;
Figure 6 shows a flowchart of a yet further method of assembling an aircraft structure according to the present disclosure;
Figure 7 shows a flowchart of a still further method of assembling an aircraft structure according to the present disclosure; and
Figure 8 shows an aircraft comprising an aircraft structure assembled by the aircraft assembly system according to the present disclosure.

### DETAILED DESCRIPTION

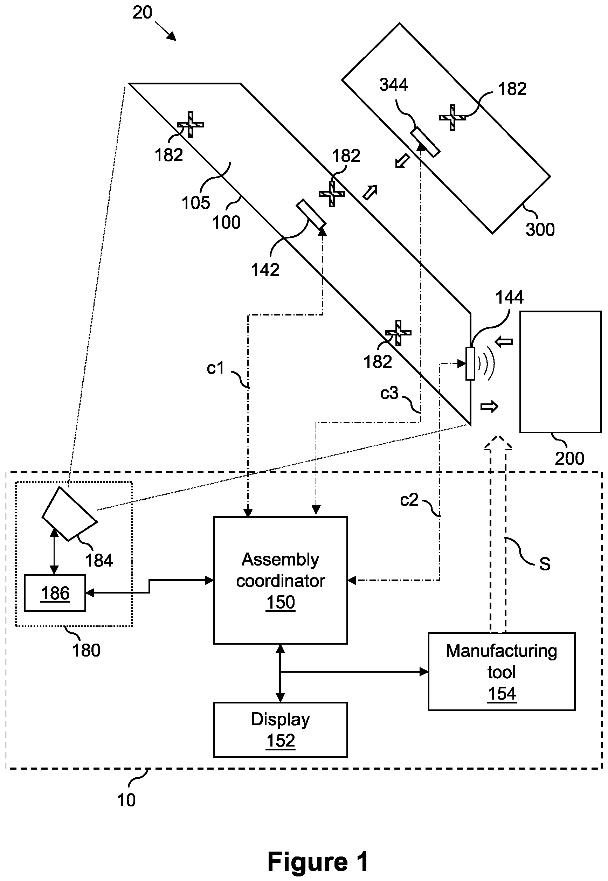

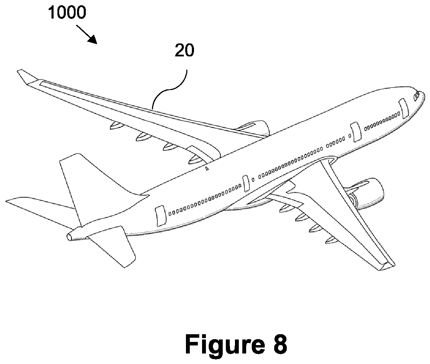

An aircraft assembly system 10 for assembly of an aircraft structure using aircraft structural elements is shown in Figure 1. In particular, the example of Figure 1 illustrates the aircraft assembly system 10 being used to attach a first wing cover 200 and a second wing cover 300 to a rib 100 to assemble a portion of a wing 20. An aircraft 1000 comprising the wing 20 assembled by the aircraft assembly system 10 is illustrated in Figure 8.

The aircraft assembly system 10 comprises an assembly coordinator 150, a photogrammetry system 180, a display 152, and a manufacturing tool 154. The rib 100 comprises a first sensor 142, a second sensor 144, and three integrally formed photogrammetry targets 182. The first wing cover 200 is absent any such sensors or integrally formed photogrammetry targets, but the second wing cover 300 also comprises an integrally formed photogrammetry target 182 and a sensor 344.

As an overview, the sensors 142, 144, 344 and integrally formed photogrammetry targets 182 of the aircraft structural elements can be monitored by the aircraft assembly system 10 in order to schedule or determine assembly steps S of an assembly process of the wing 20.

The aircraft assembly system 10 described herein is applicable for use in the assembly of a variety of aircraft structures and constituent aircraft structural elements and is not limited to the examples described hereafter. Accordingly, the rib 100 and wing covers 200, 300 are merely examples of aircraft structural elements, and it is envisioned that the sensors 142, 144 and photogrammetry targets 182 provided therewith are suitable for use with other aircraft structural elements, where appropriate.

### Sensor system

Generally speaking, the sensors 142, 144, 344 are located on or within an aircraft structural element, in this instance on or within the rib 100 and second wing cover 300, and each sensor 142, 144, 344 is operable to generate a signal which is indicative of a parameter experienced by the respective aircraft structural element during assembly. Such a parameter may be, for instance, a force, a stress, a strain, a torque, a proximity to another aircraft structural element, a degree of deformation, a temperature, acoustic properties, a vibration, or the like.

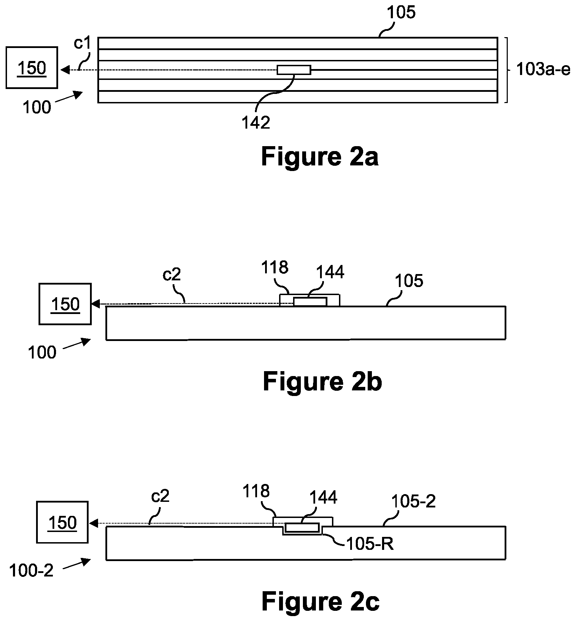

Figure 2a illustrates an example of how the first sensor 142 can be embedded within the rib 100. In the example of Figure 2a, the rib 100 has a composite construction and is formed from multiple layers 103a-e, or plies, of material. The first sensor 142 is disposed between a first layer 103b and a second layer 103c of the multiple layers, and can be installed into the rib 100 during a lay-up manufacturing process. The first sensor 142 is physically coupled to the first layer 103b and the second layer 103c of the rib 100 by provision of an adhesive. The first sensor 142 is a strain sensor, in particular an optical fibre Bragg grating sensor, and is operable to determine a strain experienced by the rib 100. Being affixed to layers 103b, 103c of the rib 100 allows the first sensor 142 to make a more accurate measurement of strain experienced by the rib 100 by being coupled to movement of the layers 103b, 103c of the rib 100.

In other examples where the rib 100 is monolithically formed from a largely or entirely homogenous material, the first sensor 142 may be embedded within a continuous volume of the material forming the rib 100, and may be installed during a molding or casting process, for example. In some examples, the first sensor 142 is installed after manufacture of the rib 100, for example by machining of an internal portion of the rib 100 which receives the first sensor 142. In such a configuration, adhesive may be provided to attach the first sensor 142 to the machined internal portion of the rib 100.

The second sensor 144 is provided on an external surface 105 of the rib 100, as illustrated in Figure 2b. The sensor 344 on the second wing cover 300 is also an external surface sensor, and so the following discussion can apply similarly. The second sensor 144 is attached to the external surface 105 of the rib and fastened to the external surface 105 of the rib by adhesive, though in other examples may be additionally or alternatively mechanically fastened to the external surface 105 of the rib 100.

Figure 2c illustrates a second possible configuration for the second sensor 144 in the context of a second rib 100-2. The second rib 100-1 comprises a second external surface 105-2 with a recessed portion 105-R. The recessed portion 105-R is dimensioned to be substantially the same size and shape as the second sensor 144 to thereby house the second sensor 144 and prevent movement of the second sensor 144, retaining the second sensor 144 at a fixed location on the second external surface 105-2 of the second rib 100-2. The second sensor 144 may be affixed within the recessed portion 105-R by adhesive or mechanical fasteners, for example. The second sensor 144 is, by being housed in the recessed portion 105-R, partially embedded within the second rib 100-2. The recessed portion 105-R can reduce prominence of the second sensor 144 from the second external surface 105-2 of the second rib 100-1.

The second sensor 144, in each configuration described above, is covered in a waterproof coating 118, which can act as a weatherproof housing 118 such that the second sensor 144 is flightworthy. Such a weatherproof housing 118 may be a bespoke covering for the second sensor 144 and in some examples may be an integral component of the second sensor 144, or the waterproof housing 118 could be by provision of an interfay sealant applied to and around the second sensor 144, for example. Internal sensors 142 provided within the rib 100 may also be flightworthy; weatherproofing may arise from the embedded nature of the internal sensor 142, such that the surrounding body of the rib 100 acts as a sealed enclosure for example, or, similarly to the external sensor 144, may be specifically provided by a weatherproof housing or waterproof coating, for example.

The second sensor 144 is a force sensor, in particular a force sensing resistor, and is operable to detect contact of the rib 100 with an external body such as another aircraft structural element 200, 300.

It will be appreciated that, more generally, sensors provided additionally or alternatively to the first sensor 142 within the rib 100 may measure parameters such as force, temperature, acoustic properties, and a degree of deformation, and that sensors within the rib 100 are not limited to measuring strain. Similarly, sensors provided additionally or alternatively to the second sensor 144 on an external surface of the rib 100 may measure a similar variety of parameters and are not limited to measuring force. In some examples, the sensors 142, 144 provide measurements of more than one parameter concurrently. In some examples, the sensors 142, 144 operate on a distributed sensing basis, wherein multiple sensing nodes contribute measurements which are collated to calculate an aggregated or averaged parameter measurement, for example.

Transmitters are provided to provide communication pathways, generally designated "c", between the sensors 142, 144, 344 and the assembly coordinator 150. The transmitters may have wired or wireless connectivity, and in general the precise implementation is immaterial to the present disclosure. For instance, in the example of Figure 1, the first sensor 142 transmits signals via a first communication pathway *c1* which is a Bluetooth connection, whilst the second sensor transmits signals 144 via a second communication pathway *c2* which is a wired electrical connection. The sensor 344 of the second wing cover 300 communicates by a third communication pathway *c3* which is based on RF transmission. It will be appreciated that there are numerous variations on how to permit connectivity between the sensors 142, 144, 344 and the assembly system 10; for instance, a transmitter may coordinate the signals from multiple sensors, whereas in some examples each sensor may have its own configuration for sending signals to the assembly system 10. Multiple redundant communication pathways may be established between the sensors 142, 144, 344 and the assembly system 10 as a failsafe, for example, to help facilitate constant communication between the sensors 142, 144, 344 and the assembly system 10.

During assembly, the rib 100 and wing covers 200, 300 are positioned relative to one another, and attached together. The sensors 142, 144, 344 provided on the rib 100 and wing covers 200, 300 are used to monitor parameters of the assembly process. In particular, the first and second sensors 142, 144 permit direct measurements of parameters experienced by the rib 100, and the sensor 344 on the second wing cover 300 permits direct measurements of parameters experienced by the second wing cover 300. Typically, measurement of these parameters is altogether absent from the assembly process, or these parameters may be estimated by indirect measurements which can suffer from inaccuracy. For instance, the sensors 142, 144, 344 may provide measurements in restricted access conditions or an inadequate assembly environment where operation of external sensors may be restricted or prevented, for example. Provision of such additional measurements can allow for additional assembly operations which might not otherwise be performable in other assembly systems due to a lack of such measurements. By providing improved accuracy of measurements, assembly steps with improved accuracy may be performed.

The first sensor 142 provides signals to the assembly coordinator 150, via the first communication pathway *c1,* which are indicative of strain experienced by the rib 100 during assembly of the rib 100 into the aircraft wing 20. Such strain can result from fastening of the rib 100 to other aircraft structural elements, such as the wing covers 200, 300.

The second sensor 144 provides signals to the assembly coordinator 150, via the second communication pathway *c2*, which are indicative of a force experienced by the rib 100 during assembly of the rib 100 into the aircraft wing 20, in particular to detect a force generated by the first wing cover 200 contacting the rib 100. This can allow for the determination of correct placement and contact of the first wing cover 200 relative to the aircraft rib 100, even when direct line of sight of adjoining portions of the structural elements 100, 200 is not possible, for example.

The signals provided by the sensors 142, 144, 344 may be provided continuously, for example to allow constant monitoring of parameters of the assembly process. In some examples, the signals are output by the sensors 142, 144, 344 only when exceeding a threshold value such as a warning value.

Examples of assembly processes performed using and informed by the signals received from the sensors 142, 144, 344 are described shortly hereafter under *Assembly system.* However, generally, such sensors 142, 144 may provide direct measurements of aircraft structural elements 100, 200, 300 which are otherwise unavailable during conventional assembly processes. For instance, the sensors 142, 144, 344 may be located in locations which, during assembly, are difficult, or impossible, for a human operator to access, or are not visible externally.

Once assembly is complete, the sensors 142, 144, 344 may be deactivated but remain in place in the assembled aircraft 1000. As described previously, the sensors 142, 144, 344 may be housed in a weather-proof housing 118 which renders them flightworthy. By ensuring the sensors 142, 144, 344 are flightworthy and thereby allowing the sensors 142, 144, 344 to remain in place post-assembly, the assembly process can be sped-up by removing or reducing clean-up steps which can otherwise be time-consuming. In some examples, portions of the sensors 142, 144, 344 and/or the transmitters may be removed; for example, wired communication pathways c may be stripped and removed post-assembly whilst the respective sensor remains in place.

### Photogrammetry system

Turning now to the integrally formed photogrammetry targets 182; three photogrammetry targets 182 are distributed across the external surface 105 of the rib 100 at separate locations, and each of these photogrammetry targets 182 is integrally formed in the external surface 105 of the rib 100. The second wing cover 300 also comprises a single photogrammetry target 182, and the following discussion applies similarly. A photogrammetry target 182 being integrally formed means that the photogrammetry target 182 can be formed of a same material or same materials as the rib 100. For example, the rib 100 may be formed from a cast metal. The photogrammetry targets may be formed during casting of the rib 100, or may be machined into the external surface 105 of the rib 100 after formation of the rib 100. The photogrammetry targets 182, in being integrally formed in the rib 100, can thereby be formed from flightworthy materials and hence not require removal prior to flight of the aircraft 1000, in contrast with typical photogrammetry targets which are applied and removed by an operator during the assembly process. The integral formation of the photogrammetry targets 182 can allow them to be more precisely or accurately positioned.

Each photogrammetry target 182 is designed such that it is visible to the photogrammetry system 180. In particular, each photogrammetry target 182 comprises a shape, or geometric design, whose presence in the external surface 105 and orientation is identifiable visually by the photogrammetry system 180.

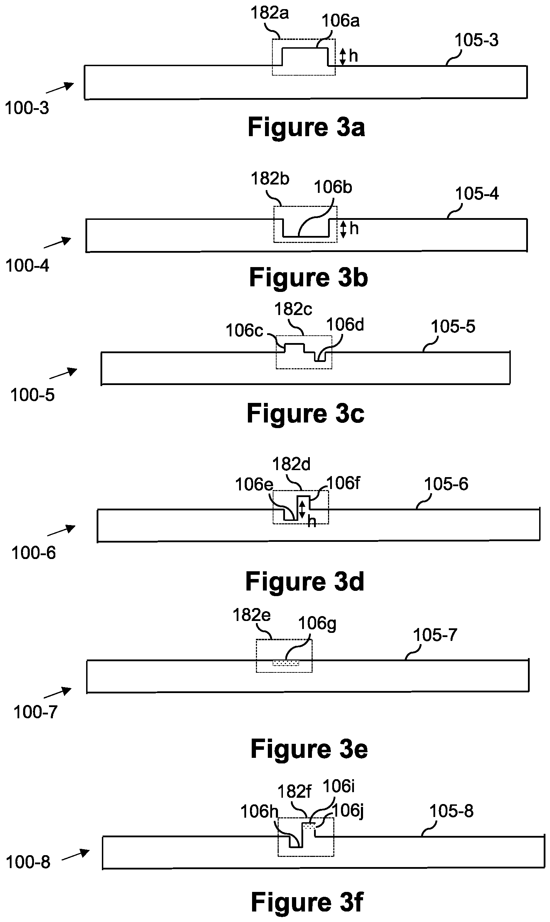

Figures 3a-3f illustrate example configurations for the photogrammetry targets 182. Aircraft structural elements comprising integrally formed photogrammetry targets 182 may comprise any combination of the following examples.

Figure 3a illustrates a third rib 100-3 having a third external surface 105-3 comprising an integrally formed photogrammetry target 182a according to a first example. The integrally formed photogrammetry target 182a according to the first example is formed of a protruding portion 106a of the third external surface 105-3. The protruding portion 106a protrudes, relative to surrounding portions of the third external surface 105-3, by a height *h*.

Figure 3b illustrates a fourth rib 100-4 having a fourth external surface 105-4 comprising an integrally formed photogrammetry target 182b according to a second example. The integrally formed photogrammetry target according to the second example is formed of a recessed portion 106b of the fourth external surface 105-4. The recessed portion 106b is recessed, relative to surrounding portions of the fourth external surface 105-4, by a depth *h.*

Figure 3c illustrates a fifth rib 100-5 having a fifth external surface 105-5 comprising an integrally formed photogrammetry target 182c according to a third example. The integrally formed photogrammetry target 182c according to the third example is formed of a combination of a protruding portion 106c and a recessed portion 106d of the fifth external surface 105-5. The protruding portion 106c of the fifth external surface 105-5 is not directly adjacent to the recessed portion 106d of the fifth external surface 105-5.

Figure 3d illustrates a sixth rib 100-6 having a sixth external surface 105-6 comprising an integrally formed photogrammetry target 182d according to a fourth example. The integrally formed photogrammetry target 182d according to the fourth example is formed of a protruding portion 106f of the sixth external surface 105-6 which is directly adjacent to, or abuts, a recessed portion 106e of the sixth external surface 105-6. In this way, the overall height difference between the recessed portion 106e of the sixth external surface 105-6 and the protruding portion 106f of the sixth external surface 105-6 has a value of *h.*

In general, the presence of protruding or recessed portions can aid visibility of the integrally formed photogrammetry targets 182 by, for example, casting shadows due to external light sources which renders the integrally formed photogrammetry targets 182 more visible compared to surrounding planar portions of the external surface 105. The presence or form of the recessed, protruding portions 106a, 106b can be determined by ensuring structural integrity of the aircraft structural element, for example by ensuring that the aircraft structural element retains a requisite thickness even with the presence of recessed portions.

Figure 3e illustrates a seventh rib 100-7 having a seventh external surface 105-7 comprising an integrally formed photogrammetry target 182e according to a fifth example. The integrally formed photogrammetry target 182e according to the fifth example is substantially planar with the surrounding seventh external surface 105-7 of the seventh rib 100-7, and instead of protruding or recessed portions, comprises a textured portion 106g. Here, the textured portion 106g comprises millimeter-scale surface detailing in a cross-hatched design which takes upon a matte appearance relative to the surrounding seventh external surface 105-7, which renders it visible to a photogrammetry system as it is less reflective and so can be distinguished visually. In other examples, the textured portion 106g may be polished to more reflective of light and therefore visible to a photogrammetry system. Accordingly, the integrally formed photogrammetry targets 182 need not protrude or be recessed relative to external surface 105 of the rib 100, which can simplify meeting construction tolerances when abutting the external surface 105 with further aircraft structural elements, for example.

Figure 3f illustrates an eighth rib 100-8 having an eighth external surface 105-8 comprising an integrally formed photogrammetry target 182f according to a sixth example. The integrally formed photogrammetry target 182f according to the sixth example is substantially similar to the integrally formed photogrammetry target 182d according to the fourth example, being formed of protruding 106j and recessed 106h portions in the eight external surface 105-8, but here the protruding portion 106j of the eight external surface 105-8 comprises a textured portion 106i, similar to the textured portion 106c of the integrally formed photogrammetry target 182e of the fifth example. This can further augment visibility of the integrally formed photogrammetry targets 182.

The photogrammetry targets 182 can be congruent, or can be different to one another; in particular, each photogrammetry target 182 could have a unique geometric design. Additionally, the design of the photogrammetry targets 182 can change varying on where on an aircraft structural element the target is located, or based on the aircraft structural element in which the photogrammetry target 182 is integrally formed. For instance, an integrally formed photogrammetry target 182 on a relatively thin aircraft structural element such as a wing cover 200, 300 may have a textured but substantially planar form such as that depicted in Figure 3e.

The photogrammetry system 180 comprises an imaging device 184 and a photogrammetry processor 186. The skilled person will appreciate that a variety of techniques and configurations can be used to perform photogrammetry, and which would be suitable for use with the present disclosure. Generally, in use, the imaging device 184 captures images of the rib 100 including one or more of the integrally formed photogrammetry targets 182. The photogrammetry processor 186 processes the captured images of the rib 100 including the one or more integrally formed photogrammetry targets 182 and determines an orientation and/or position, or pose, of the imaged integrally formed photogrammetry targets 182. From this, the photogrammetry processor 186 can determine an orientation and/or position of the rib 100. The photogrammetry processor 186 can implement pose estimation techniques to perform such calculations. Information related to the position or orientation of the integrally formed photogrammetry targets 182 is hereafter referred to as pose information. The photogrammetry system 180, in other examples, may comprise more than one imaging device 184.

In the example of Figure 1, three integrally formed photogrammetry targets 182 are provided on the rib 100. This can allow the photogrammetry system 180 to determine a geometric plane which can aid in accurately ascertaining a pose of the rib 100. In some examples, just a single integrally formed photogrammetry target 182 may be provided, for instance if it is known that the single integrally formed photogrammetry target 182 will be visible at all stages of an assembly process. For example, the second wing cover 300 has a single integrally formed photogrammetry target 182. Such a single integrally formed photogrammetry target 182 may be larger and/or have a design which permits a geometric plane to be established by the photogrammetry system 180. In some examples, a plurality of integrally formed photogrammetry targets 182 which are distributed around an external surface 105 such that at least three photogrammetry targets 182 can be seen from any angle would allow the pose, or position or orientation, of the aircraft structural element 100 to always be determined by the photogrammetry system 180.

### Assembly monitoring system

The assembly coordinator 150 generally represents a processor or processing capabilities which can receive and utilise signals from the sensors 142, 144, 344 and pose information from the photogrammetry system 180 to inform the assembly process. In this example, the assembly coordinator 150 is a desktop computer, but it will be appreciated that more generally it may be any sort of localised or distributed processing system operable to perform tasks described herein.

The display 152 is, generally, operable to output and display information processed by the assembly coordinator 150, for example to a human operator performing steps of the assembly process. In the example of Figure 1 the display 152 is a computer monitor and is capable of displaying computer graphics, but in other examples the display 152 may be provided by a more simplistic arrangement such as individual light emitting elements, for instance, which can be illuminated or switched off in order to convey information to a human operator. The display 152 may also, in some examples, be a plurality of separate displays, for example where each display is dedicated to a particular measured parameter or particular piece of assembly information. The display 152 can comprise other outputs such as audio outputs and/or tactile outputs which may convey information to a human operator.

The display 152 can be used to display instructions which instruct performing a step of assembly, the instructions based on the signals received from the sensors 142, 144, 344 and/or pose information received from the photogrammetry system 180 and subsequently processed by the assembly coordinator 150. For example, the display 152 can output movement instructions to a user which, based on the signals received from the sensors 142, 144, 344 and/or pose information received from the photogrammetry system 180, instruct movement of the rib 100 and/or wing covers 200, 300, such as reorientations or translations. The display 152 can also output status information related to whether the rib 100 and/or wing covers 200, 300 are correctly aligned, fastened, again based on signals received from the sensors 142, 144 and/or pose information received from the photogrammetry system 180. The display 152 can also output parameter values or pose information which a user can interpret themselves in order to determine a next step of assembly.

The manufacturing tool 154 generally represents a piece of equipment which is operable during the assembly process. The assembly coordinator 150 is operable to output information and/or instructions to the manufacturing tool 154 which can, in turn, perform a step of assembly S using the received instructions from the assembly coordinator 150. In the example of Figure 1, the manufacturing tool 154 is a robotic arm, but it will be clear to the skilled person that in other examples the manufacturing tool 154 may be an automated assembly jig, a fastening system, or the likes. In some instances, the manufacturing tool 154 may itself comprise processing capabilities, and may perform further calculations based on data received from the assembly coordinator 150 in order to determine an assembly step. In other examples, the manufacturing tool 154 may not comprise processing capabilities, and the assembly coordinator 150 may effectively manage a degree of automation of the manufacturing tool. In some examples, a plurality of manufacturing tools 152 in communication with the assembly coordinator 150 are operable individually and/or concurrently to perform a step of assembly.

The manufacturing tool 152 is operable to, based on the signals received from the sensors 142, 144, 344 and/or pose information received from the photogrammetry system 180, automatically perform a step of assembly. For example, the manufacturing tool 152 may be an automated assembly jig, and in response to pose information from the photogrammetry system 180 indicating that the rib 100 is misaligned, may reorientate and/or translate the rib 100 to a correct orientation and/or position. The manufacturing tool 152 may be a robotic arm equipped with a fastener, and in response to confirmation of correct position and orientation of the rib 100 and second wing cover 300 from the photogrammetry system 180 and confirmation of contact force from the sensor 344 of the second wing cover 300, may fasten the second wing cover 300 to the rib 100 until the parameter indicative of contact force surpasses a threshold value indicating a secure fastening.

During assembly, the assembly coordinator 150 monitors signals received from the sensors 142, 144, 344 and information received from the photogrammetry system 180. Figures 3-6 illustrate examples of actions which can be performed by or using the assembly system 10 during assembly of the rib 100 and wing covers 200, 300 into the aircraft wing 20, and more generally during assembly of one or more aircraft structural elements into an aircraft structure.

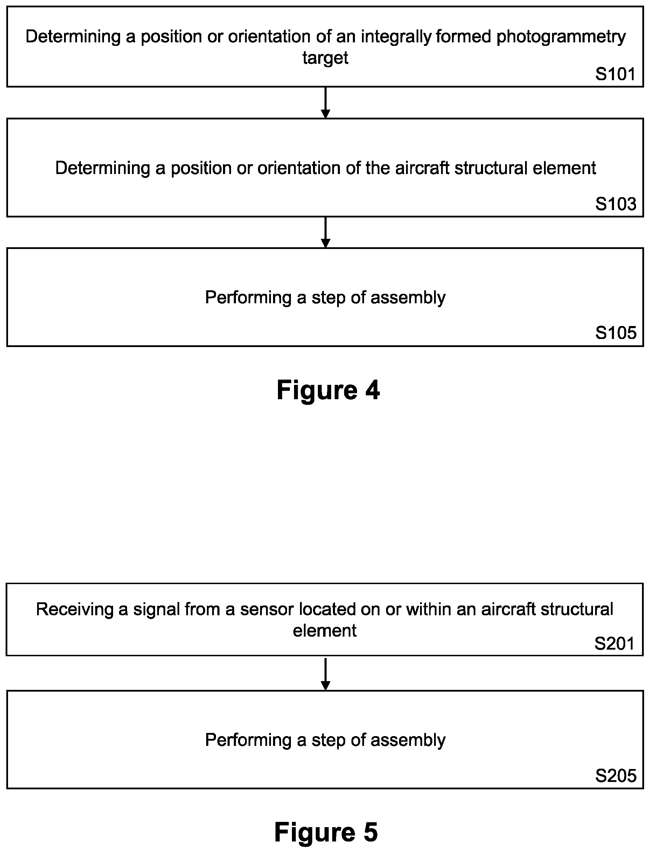

Turning to Figure 4, which describes the use of the photogrammetry system 180: at item S101 a position or orientation of an integrally formed photogrammetry target 182 is determined using the photogrammetry system 180. At item S101, the position or orientation of multiple integrally formed photogrammetry targets 182 may be determined to improve accuracy, for example. Item S101 may also involve working out the position and orientation of photogrammetry targets across multiple aircraft structural elements, such as the integrally formed photogrammetry targets 182 on the rib 100.

At item S103, a position or orientation of the aircraft rib 100 based on the position of orientation of the integrally formed photogrammetry target 182 is determined. This may be performed by the photogrammetry system 180 itself, or by the assembly coordinator 150. For instance, the assembly coordinator 150 may be configured to convert information related to the pose of photogrammetry targets 182 to information related to the pose of the aircraft rib 100 based on a predefined three-dimensional mapping of photogrammetry targets 182 to the aircraft rib 100. At item S103, the position or orientation of multiple aircraft structural elements 100, 300 may be determined based on the position or orientations of respective integrally formed photogrammetry targets 182 determined at item S101.

At item S105, a step of assembly is performed based on the measured position or orientation of the aircraft rib 100. The step of assembly may be to perform movement of the aircraft rib 100 in order to bring the aircraft rib 100 into alignment with the wing covers 200, 300, for example. The step of assembly may be to affix a wing cover 200, 300 to the aircraft rib 100 because the position and orientation of each are deemed to be correct, for example. The step of assembly may be performed on a further aircraft structural element based on the measurement of the aircraft rib 100, for example. Where the position or orientation of both of the aircraft rib 100 and the second wing cover 300 is determined by the photogrammetry system 180 at items S101, S103, a respective step of assembly for each may be performed.

Turning to Figure 5, which describes use of the sensors 142, 144 of the aircraft rib 100, or the sensor 344 of the second wing cover 300: At item S201, a signal is received by the assembly coordinator 150 from a sensor 142, 144 located on or within the aircraft rib 100 during assembly of the aircraft rib 100 into the aircraft wing 20. The signal is indicative of a parameter experienced by or related to the aircraft rib 100 during assembly. In the case of the example of Figure 1, the signal may be indicative of a strain or force measurement recorded by the internal and external sensors 142, 144 respectively.

At item S205, a step of assembly is performed based on the received signal from the sensor 142, 144 located on or within the aircraft rib 100. At item S205, a step of comparing the received parameter with a threshold parameter could be used to inform the step of assembly. For instance, the parameter may indicate that a contact force or a strain is too high, and the step of assembly could accordingly be to reposition the rib 100 to resolve such a scenario. In some examples, the parameter may indicate that a contact force is too low, and the assembly coordinator 150 indicate that a fastener is tightened to resolve such a scenario. The step of assembly can be similar to those described at item S201.

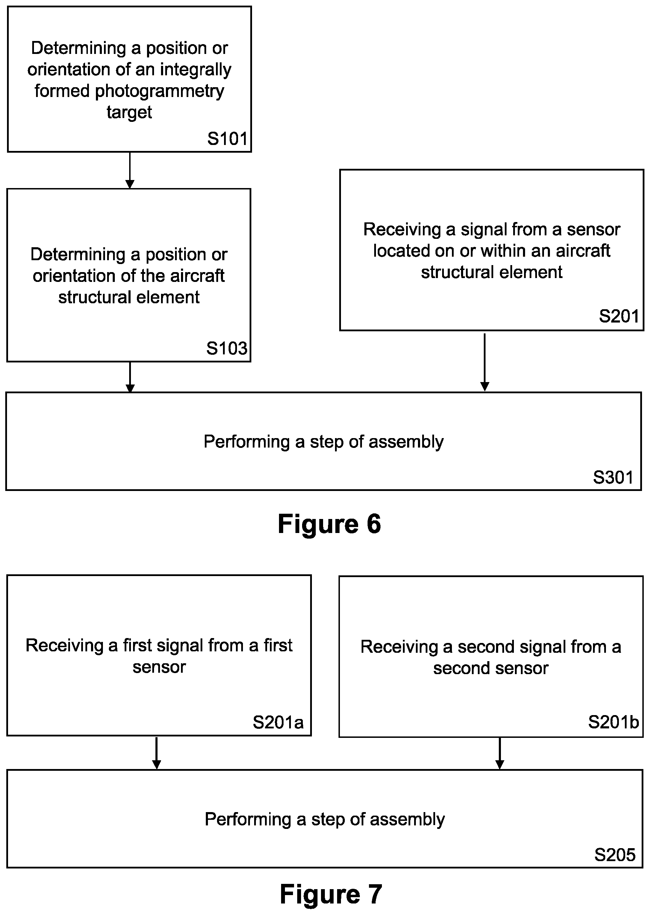

Turning to Figure 6, which describes the use of the photogrammetry system 180 in conjunction with a sensor 142, 144: items S101, S103, and S201 are all performed as per above, such that a position or orientation of the rib 100 and/or wing cover 300 is determined and a signal received from a sensor 142, 144, 344. At item S301, a step of assembly is performed based on the measured position or orientation of the aircraft structural elements by the photogrammetry system 180 and the received signal from the sensor 142, 144.

Turning to Figure 7, which describes the use of two sensors 142, 144 in performing a step of assembly: at item S201a, a first signal is received from a first sensor 142. At item S201b, a second signal is received from a second sensor 144. Items S201a and S201b are substantially similar to item S201. At item S205, a step of assembly is performed based on the received first signal from the first sensor 142 and the received second signal from the second sensor 144. More generally, Figure 6 represents that multiple sensors may be used concurrently to inform a step of assembly. For instance, at item S205 it may be determined whether a majority of sensors record parameters above a threshold value, or whether a parameter is uniformly valued across a plurality of sensors, for example. In further examples, proper alignment and attachment of an aircraft structural element to another aircraft structural element may only be considered complete once the sensors unanimously report a parameter above a certain value, for example.

The skilled person will appreciate that a wide variety of potential assembly steps can be performed based on measurements originating from the sensors 142, 144, 344 and integrally formed photogrammetry targets 182, and are not limited to the explanatory examples described above. The items depicted in Figures 3-6 may be repeated to form continuous feedback loops, in which steps of assembly are performed, and new measurements of the integrally formed photogrammetry targets or data received from the sensors 142, 144, 344 are used to inform further steps of assembly, and so on.

Above embodiments are to be understood as an illustrative example of the invention. Further embodiments of the invention are envisaged:
For example, in the example of Figure 1 an assembly system 10 using both photogrammetry targets 182 and sensors 142, 144, 344 is described. However, it will be appreciated that in other examples, only the photogrammetry targets 182 and associated photogrammetry system 180 may be present, without use of the sensors 142, 144, 344. Equally, in other examples, only the sensors 142, 144, 344 are present and the assembly system 10 does not comprise a photogrammetry system 180, and the aircraft structural element does not comprise integrally formed photogrammetry targets 182.

In some examples, the aircraft structural element may comprise just a single sensor. In other examples, the aircraft structural element may comprise a plurality of sensors within the aircraft structural element, and/or a plurality of sensors on an external surface of the aircraft structural element, for example. It is anticipated that providing many such sensors, for example enough to substantially cover an external surface of the aircraft structural element, or enough to cover portions of the aircraft structural element anticipated to contact other aircraft structural elements during assembly, can allow for accurate and precise monitoring of the aircraft structural element during assembly.

In some examples, a sensor may be a proximity sensor based on, for example a time-of-flight measurement, and which could be used to help determine positioning of the or another aircraft structural element, for instance. In some examples, a plurality of proximity sensors may be used to triangulate a position of the or another aircraft structural element, for example.

In some examples, the parameter detected by a first sensor may be the existence of, proximity with, or contact with a second sensor. For example, a first sensor on a first aircraft structural element may detect the presence, proximity, and/or contact with a second sensor which is on a second aircraft structural element. For instance, the first sensor may create a signal which is detectable by the second sensor.

In some examples, the parameter detected by a sensor may indicate a degree of deformation; this may be similar to a measure of strain, but may also encompass detecting whether an aircraft structural element is out-of-shape without necessarily being a precise measurement of strain.

The sensors used in the example of Figure 1 are a force-sensing resistor and an optical fibre Bragg grating sensor. The skilled person will appreciate that a wide variety of other sensors may be used in accordance with the present disclosure. For example, piezoelectric sensors, capacitive force sensors, or smart memory alloy sensors. In particular, a smart memory alloy sensor may be straightforwardly run through layers of a composite material during a layup process, similar to the example illustrated in Figure 2a, for stress and strain measurements, for example.

It is be understood that any feature described in relation to any one embodiment may be used alone, or in combination with other features described, and may also be used in combination with one or more features of any other of the embodiments, or any combination of any other embodiments. Furthermore, equivalents and modifications not described above may also be employed without departing from the scope of the invention, which is defined in the accompanying claims.

It is to be noted that the term "or" as used herein is to be interpreted to mean "and/or", unless expressly stated otherwise.

It is to be noted that the terms "second", "third", "fourth", "fifth" as used herein are used as labels for clarity, and do not imply the existence of "first" or further features unless expressly described otherwise.

## Claims

1. An aircraft structural element configured to be assemblable into an aircraft structure, the aircraft structural element comprising a sensor disposed on or within the aircraft structural element, the sensor configured to;
sense a parameter during assembly of the aircraft structural element into the aircraft structure; and
output a signal indicative of the parameter during assembly of the aircraft structural element into the aircraft structure.

2. The aircraft structural element according to claim 1, wherein the parameter is indicative of one or a combination of:
- a force experienced by the aircraft structural element during assembly of the aircraft structural element into the aircraft structure;
- a stress experienced within the aircraft structural element during assembly of the aircraft structural element into the aircraft structure
- a degree of deformation experienced by the aircraft structural element during assembly of the aircraft structural element into the aircraft structure; and
- physical contact between the aircraft structural element and a further aircraft structural element during assembly of the aircraft structural element and the further aircraft structural element into the aircraft structure.

3. The aircraft structural element according to any previous claim, wherein the sensor is operable as a proximity sensor such that the parameter is indicative of a distance between the aircraft structural element and at least one other aircraft structural element during assembly of the aircraft structural element into the aircraft structure.

4. The aircraft structural element according to any previous claim, wherein the sensor is located on an external surface of the aircraft structural element.

5. The aircraft structural element according to claim 4, wherein the aircraft structural element comprises a recessed portion on the external surface, the recessed portion dimensioned to receive and retain the sensor in a position.

6. The aircraft structural element of according to any of claim 1 to 3, wherein the sensor is located within the aircraft structural element.

7. The aircraft structural element according to claim 6, wherein the aircraft structural element is formed of a composite material and the sensor is embedded between layers of the composite material.

8. The aircraft structural element according to any previous claim, wherein the sensor is configured to output the signal indicative of the parameter upon a measured value of the parameter passing a predetermined threshold value of the parameter during assembly of the aircraft structural element into the aircraft structure, and may continuously output the signal indicative of the parameter during assembly of the aircraft structural element into the aircraft structure.

9. The aircraft structural element according to any previous claim, comprising a transmitter configured to transmit the signal indicative of the parameter from the sensor, the transmitter comprising at least one of a wired and a wireless connection.

10. The aircraft structural element according to any previous claim, wherein the sensor is a first sensor, the parameter is a first parameter, and the signal is a first signal; and the aircraft structural element comprises a second sensor configured to sense a second parameter during assembly of the aircraft structural element into the aircraft structure and output a second signal indicative of the second parameter during assembly of the aircraft structural element into the aircraft structure.

11. The aircraft structural element of claim 10, wherein the first sensor is located on an external surface of the aircraft structural element, and the second sensor is located within the aircraft structural element.

12. The aircraft structural element according to any previous claim, wherein the aircraft structural element comprises an external surface having an integrally formed photogrammetry target.

13. An aircraft assembly system comprising an aircraft structural element according to any previous claim, and an assembly coordinator configured to receive the signal indicative of the parameter from the sensor of the aircraft structural element.

14. The aircraft assembly system according to claim 13, wherein the aircraft assembly system comprises a display, and the assembly coordinator and the display are configured to output information indicative of the parameter to a user.

15. The aircraft assembly system according to claim 13 or 14, wherein the aircraft assembly system comprises a manufacturing tool, the assembly coordinator and manufacturing tool configured to perform a step of assembly of the aircraft structure based on the received signal indicative of the parameter from the sensor.

16. The aircraft assembly according to claim 15, wherein the step of assembly is moving the aircraft structural element by reorientation or translation.

17. A method of assembling an aircraft structure comprising:
receiving a signal from a sensor located on or within an aircraft structural element of the aircraft structure during assembly of the aircraft structural element into the aircraft structure, the sensor configured to sense a parameter during assembly of the aircraft structure using the aircraft structural element, and the signal indicative of the parameter during assembly of the aircraft structural element into the aircraft structure; and
performing a step of assembly of the aircraft structure based at least in part on the received signal.

18. The method according to claim 17, wherein the sensed parameter is indicative of one or a combination of:
- contact with a further aircraft structural element for attaching to the aircraft structural element during assembly, and wherein the step of assembly comprises reorienting or translating the further aircraft structural element until the signal received from the sensor indicates contact between the aircraft structural element and the further aircraft structural element; and
- a strain experienced by the aircraft structural element during assembly of the aircraft structural element into the aircraft structure, and wherein performing a step of assembly comprises reorienting or translating the aircraft structural element to keep the strain indicated by the sensed parameter below a threshold value.
